Europäisches Patentamt

(19) European Patent Office

Office européen des brevets

(11) Publication number: **0 194 504**
**B1**

(12) EUROPEAN PATENT SPECIFICATION

(45) Date of publication of the patent specification:
24.01.90

(51) Int. Cl.⁴: **B22F 7/06**

(21) Application number: 86102444.6

(22) Date of filing: 25.02.86

(54) Composite body and method of manufacturing the same.

(30) Priority: 26.02.85 JP 36975/85

(43) Date of publication of application:
17.09.86 Bulletin 86/38

(45) Publication of the grant of the patent:
24.01.90 Bulletin 90/4

(84) Designated Contracting States:
DE FR GB SE

(56) References cited:
EP-A- 0 052 584
EP-A- 0 072 424
EP-A- 0 090 658
FR-A- 895 819
GB-A- 1 588 920
GB-A- 2 092 050
GB-A- 2 099 044

(73) Proprietor: KABUSHIKI KAISHA TOSHIBA, 72,
Horikawa-cho Saiwai-ku, Kawasaki-shi
Kanagawa-ken 210(JP)

(72) Inventor: Yamaguchi, Morie c/o Patent Division,
KABUSHIKI KAISHA TOSHIBA 1-1 Shibaura 1-chome,
Minato-ku Tokyo 105(JP)
Inventor: Horita, Chiezo c/o Patent Division, KABUSHIKI
KAISHA TOSHIBA 1-1 Shibaura 1-chome, Minato-ku
Tokyo 105(JP)
Inventor: Suzuki, Shigeo c/o Patent Division,
KABUSHIKI KAISHA TOSHIBA 1-1 Shibaura 1-chome,
Minato-ku Tokyo 105(JP)
Inventor: Sakata, Yasuo c/o Patent Division, KABUSHIKI
KAISHA TOSHIBA 1-1 Shibaura 1-chome, Minato-ku
Tokyo 105(JP)

(74) Representative: Henkel, Feiler, Hänzel & Partner,
Möhlstrasse 37, D-8000 München 80(DE)

## Description

The present invention relates to a composite body obtained by combining and bonding a sintered metal body and a sintered ceramic body in the presence of a matrix body.

The use of composite bodies obtained by bonding sintered ceramic bodies with metal bodies as mechanical parts providing high wear-resistance has been the subject of recent study. In the manufacture of such composite bodies, the ceramic and metal bodies must be firmly bonded. Conventional methods of bonding ceramic and metal bodies include thermal insertion, diffusion bonding, and soldering. Since the bonding between the ceramic and metal bodies is weak in these conventional methods, the finished composite bodies have low reliability. In addition, these processes are complex and expensive in terms of production.

In a bonding method described in JP-A 59 205 406 a metal ring-shaped body is obtained after preforming a metal powder. A sintered ceramic body is fitted in the metal body and the assembly is sintered. In the cooling step after sintering, the sintered metal body contracts and compresses the ceramic body. This method is an example of manufacturing a composite body by thermal insertion and therefore features the problems discussed above.

Prior art document EP-A 0 052 584 discloses a method of producing a steel body comprising hard material inserts, e.g. carbide buttons, in which a steel powder is combined with said hard material which comprises placing a preformed hard material in a die, adding steel powder to sorround the insert, compacting the steel powder to a high density preform and sintering the preform to produce a firm fixation of the hard material insert in the steel body. The hard material insert can be tapered or may present surface irregularities or surface parts of particular shape such as a neck, a waist, an annular groove and the like so that the steel powder is compacted around said part to mechanically lock the hard inserts in the steel body at said bonding portions. To improve bonding a burning flux is provided on the interfaces between the carbide button and the steel powder. Alternatively, a bonding metal such as e.g. pure metal, is provided between the powder and the hard material, e.g. by plating the insert.

Further, prior art document GB-A 1 588 920 describes a process for joining a metal component to a ceramic body. In this process, the meta component is first pressed into a shape to fit with a bonding position of the ceramic body before combining them together prior to a sintering step.

Prior art document GB-A 2 092 050 discloses a number of methods of joining a silicon carbide ceramic body to a metal body. Fastening the two bodies together with a binder of silicon and metal and heating the bodies and binder to effect bonding is one possibility. Another method consists in surrounding the ceramic body with a metal powder and sintering and/or pressing the same to form a shell of metal round and fastened to the ceramic body. Still another method comprises push-fitting a metal body over the silicon carbide ceramic body and then sintering them together by heating. One of the bodies of rod shape may be placed in an oversized hole in the end of the other body and a binder is introduced in the space of the hole left between said bodies. The connection is heated at a temperature of at least 1,200°C to effect a metallurgic bond between the bodies via the binder.

Finally, prior art document FR-A 895 819 describes the joining of two preformed sintered bodies of dissimilar metals by combining their preforms and sintering them together. Prior to sintering the preformed body may be infiltrated by metal salt infiltrant. A stronger connection can also be effected by provision of an inner depression or outer protrusions of said body.

It is an object of the present invention to provide a composite body with improved reliability wherein sintered ceramic and metal bodies are firmly bonded with high productivity.

This object is achieved by a composite body as defined in main claims 1 and 2. Further embodiments of the present invention are defined in claims 3 to 10.

This invention can be more fully understood from the following detailed description when taken in conjunction with the accompanying drawings, in which:

Fig. 1 is a sectional view showing an example of a composite body obtainable by combining a ceramic body and a metal body.

Figs. 2 and 3 are sectional views showing different embodiments of a method of manufacturing a composite body as illustrated in fig. 1.

Figs. 4 to 7 are sectional views showing different embodiments of composite bodies obtained by bonding sintered ceramic bodies with metal bodies.

Figs. 7–10 are sectional views showing composite bodies obtained by combining and bonding a sintered ceramic body with a sintered metal body in the presence of a matrix body according to the present invention.

Fig. 11 is a sectional view of a composite body sample according to the present invention;

Fig. 12 is a sectional view of a control sample;

Fig. 13 is a sectional view of a method of manufacturing respective samples; and

Fig. 14 is a view showing a method of performing a bonding strength test on respective samples.

In a composite body, a bonding portion is formed in a sintered ceramic body. A sintered metal body is fitted to the bonding portion or an infiltrator is filled in a space which the bonds portion and the sintered metal body, which bonds the ceramic and metal bodies.

The shapes and sizes of the composite body and the ceramic and metal bodies constituting it, and the method of bonding the ceramic and metal bodies can be changed freely. However, the bonding portion must be able to withstand forces applied to the composite body. Therefore, the bonding portion can be an annular groove or have a step-like profile in a cross-section. Different combinations of ceramic and metal bodies include:

(a) A bonding portion formed in the outer circumferential surface of a ceramic body with a metal body fitted around the outer circumferential surface of the ceramic body with the bonding portion. In this case, the thermal expansion coefficient of the ceramic body is set to be larger than that of the metal body. Combinations of materials satisfying this requirement are $Al_2O_3$, $Si_3N_4$, SiC, $ZrO_2$, and the like for the ceramic body, and invar (36wt% Ni-Fe alloy) and the like for the metal body.

(b) A bonding portion formed in the inner circumferential surface of a ceramic body, and a metal body is fitted in the inner surface having the bonding portion. In this case, the thermal expansion coefficient of the metal body is selected to be larger than that of the ceramic body. Combinations of materials satisfying this requirement are $Al_2O_3$, $Si_3N_4$, SiC, $ZrO_2$, or the like for the ceramic body, and Fe-based, stainless steel, or Cu-based alloy for the metal body.

Composite bodies consisting of ceramic and metal bodies having different thermal expansion coefficients are effectively manufactured by sintering the bodies in a heated atmosphere. When such a difference in thermal expansion coefficient is present, the ceramic and metal bodies are bonded more firmly. Composite bodies in accordance with this invention are manufactured as follows:

(c) A bonding portion is formed in the outer circumferential surface of a ceramic body. A metal body is fitted to the outer circumferential surface of the ceramic body. A matrix body consisting of ceramic or metal is fitted around the outer circumferential surface of the metal body. In this case, the thermal expansion coefficients of the materials of the respective bodies are selected such that (ceramic body) < (matrix body) < (metal body). In this combination, a bonding portion can also be formed in the matrix body.

(d) A bonding portion is formed in the inner circumferential surface of a ceramic body. A metal body is fitted in the inner circumferential surface of the ceramic body. A matrix body consisting of a ceramic or metal is fitted around the outer circumferential surface of the ceramic body. In this case, the theremal expansion coefficients of the materials of the respective bodies are selected such that (metal body) < (matrix body) < (ceramic body).

Composite bodies of combinations (c) and (d) are also suitable for manufacture in a heated atmosphere. The reason for this can be surmised as follows. In the case of combination (c), since the matrix body regulates thermal expansion of the metal body, a thermal expansion reaction is generated in the metal body. This reaction force serves to securely bond the ceramic and metal bodies, thereby providing an integral composite body.

In the case of combination (d), since the matrix body regulates thermal expansion of the ceramic body, a thermal expansion reaction is generated in the ceramic body. This reaction force serves to firmly bond the metal and ceramic bodies, again providing an integral composite body.

In order to obtain a metal body with a desired thermal expansion coefficient, the materials can be selected as described above or a ceramic powder such as glass can be mixed with a metal powder.

A conventional composite body is manufactured in the following manner:

(a) A sintered ceramic body having a bonding portion is prepared. The shape, size, and material of the ceramic body, and the shape of the bonding portion are selected as described above;

(b) A metal body of a powder consisting mainly of a metal powder is combined with the ceramic body. The metal body can be selected from a metal body having the powder arranged around a ceramic body (M1), a metal body obtained by compressing the powder into a predetermined shape (M2), a metal body obtained by compressing the powder and presintering the compressed powder into a predetermined shape (M3), and a metal body obtained by compressing the powder and sintering the compressed powder into a predetermined shape (M4). When metal body M1 is used, it need not be formed before it is combined with the ceramic body. Therefore, the total number of steps required is reduced. When metal body M2 or M3 is used, since the metal body is very soft, it can be formed easily in a later step. Metal body M4 is used when the selected material has a high tendency to deform;

(c) The metal body combined with the ceramic body is pressed so that part of it is fitted inside the bonding portion of the ceramic body. Each of metal bodies M1 to M4 has a number of pores and can easily deform even if the metal itself cannot be easily deformed. Therefore, the fitting step can be easily performed; and

(d) The pressed metal body is sintered with the ceramic body to provide a composite body in which the ceramic and metal bodies are securely locked and bonded with each other.

In sintering step (d) or in a later step, if the metal body is infiltrated with an infiltrator such as copper, the strength of the metal body is increased. In addition, the infiltrator bonds with the ceramic body, thereby improving the bonding strength between the two sintered bodies.

As another method of manufacturing a composite body, in step (b) described above, one of metal bodies M2 to M4 (excluding metal body M1) is combined with a ceramic body. A space is formed enclosed by the bonding portion of the ceramic body and the metal body, step (c) is omitted, and step (d) follows directly. At the same time, an infiltrator such as copper is infiltrated into the bonding portion, thereby manufacturing a composite body. In the obtained composite body, the ceramic and metal bodies are securely bonded with each other and with the infiltrator infiltrated into the bonding portion.

According to still another method of manufacturing a composite body, if no space is formed between the bonding portion of a ceramic body and a metal body (one of M2 to M4), after the metal body is fitted with the ceramic body, sintering step (d) is performed without performing step (c). During or after sintering step (d), the above-mentioned infiltration step can be performed.

Some examples of the shape of composite bodies and manufacturing methods thereof will be described below with reference to the accompanying drawings.

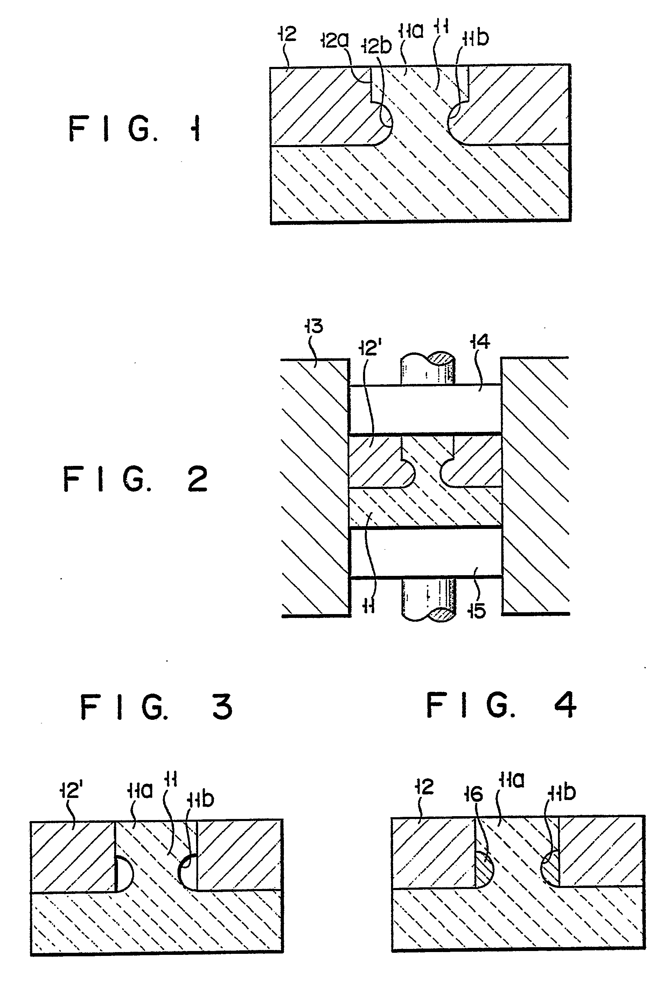

Composite Body in Fig. 1

Ceramic body 11 has rod-like portion 11a at the center of a plate. Annular groove 11b is formed in a part of the outer circumferential surface of rod-like portion 11a, and serves as a bonding portion. Metal body 12 has hole 12a for fitting over portion 11a of ceramic body 11. Projection 12b locks with annular groove 11b after the composite body is compressed.

Method of Manufacturing Composite Body - Fig. 2

In order to manufacture this composite body, ceramic body 11 is placed inside die 13. A metal powder filled on ceramic body 11 is pressed by upper and lower punches 14 and 15 to produce green compact metal body 12'. With this method, the metal powder flows and enters groove 11b of ceramic body 11. Formed metal body 12' is sintered to provide the composite body shown in Fig. 2.

Method of Manufacturing Composite Body - Fig. 3

A metal powder is pressed into green compact metal body 12' with pores. After presintering, metal body 12' is combined with ceramic body 11. Presintered metal body 12' is pressed to partially crease it, such that the creased portion extends into groove 11b of ceramic body 11. Metal and ceramic bodies 12' and 11 are sintered to obtain the composite body shown in Fig. 3. In the sintering step or in a later step, the infiltration step can also be performed.

Composite Body in Fig. 4 and Method of Manufacturing the Same

Presintered metal body 12' is combined with ceramic body 11. When bodies 12' and 11 are combined, a space is formed between groove 11a of body 11 and body 12'. The assembly is sintered without pressing metal body 12', and at the same time or in a later step, an infiltrator such as copper is infiltrated into the bonding portion. In the obtained composite body, the two bodies are bonded at the bonding portion with infiltrator 16.

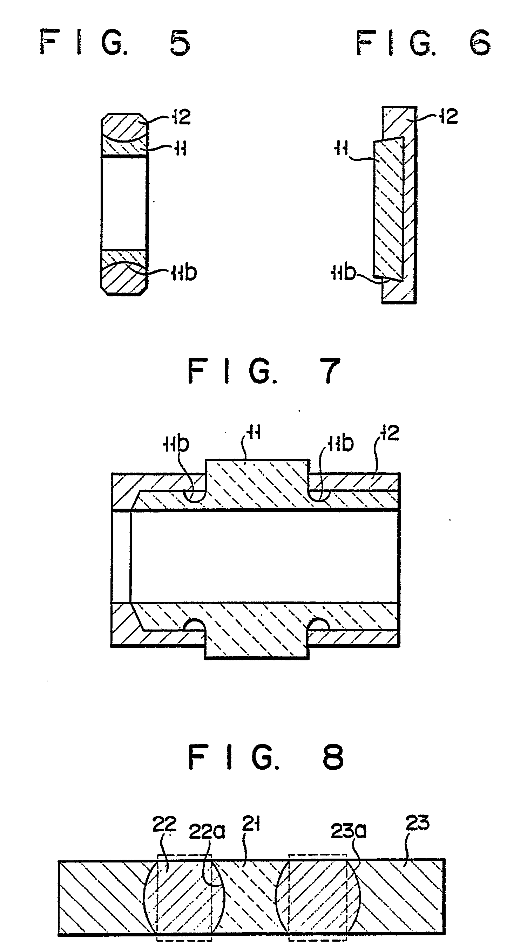

Composite Bodies in Figs. 5 to 7

The composite bodies shown in these figures have different shapes or combinations of ceramic and metal bodies and bonding portions. These shapes and combinations are selected in accordance with the possible forces expected to be applied uses of the composite bodies and possible applications thereof.

Composite Body in Fig. 8 and Method of Manufacturing the Same

Ceramic body 21 is inserted in a central hole of metal matrix body 23 with a predetermined gap left therebetween. Annular presintered metal body 22, indicated by the dotted line, is fitted in the gap. Metal body 22 is pressed so that it locks with both bonding portion 23a of the matrix body and with bonding portion 21a of ceramic body 21. The assembly is sintered to obtain the composite body.

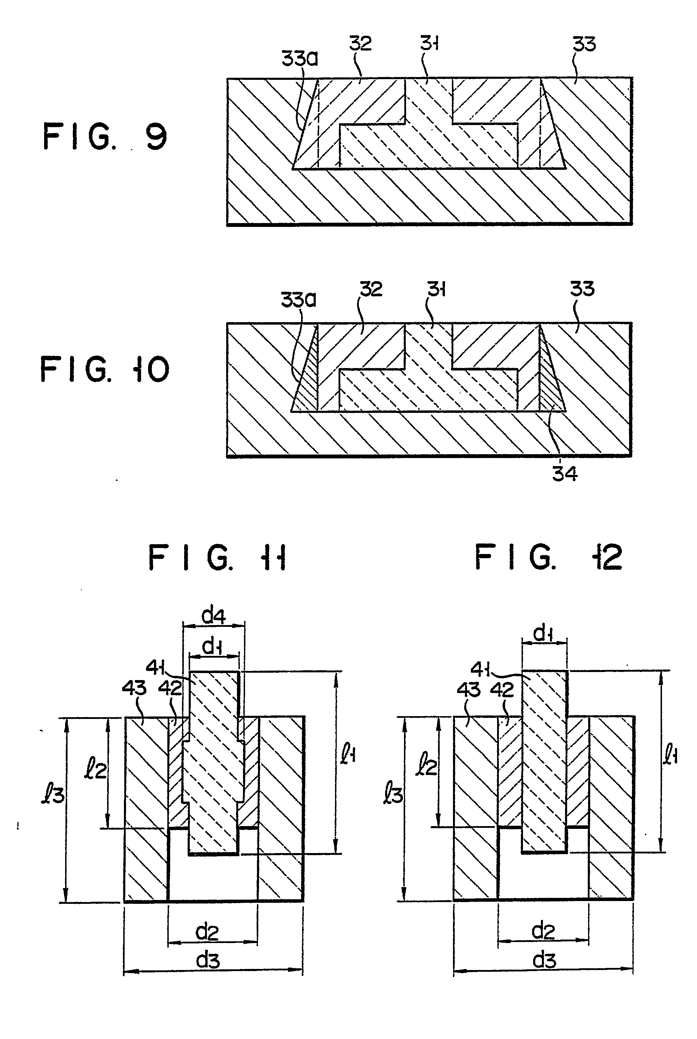

Composite Body in Fig. 9 and Method of Manufacturing the Same

Metal matrix body 33 has a recess having a tapered sectional shape. Ceramic body 31 has a shape obtained by placing a small disk at the center of a large disk. Ceramic body 31 is placed in the recess of matrix body 33 with a predetermined gap left therebetween. Annular presintered metal body 32, indicated by the dotted line, is fitted in the gap. The space enclosed by metal body 32 and matrix body 33 is bonding portion 33a of matrix body 33. Metal body 32 is pressed to extend into bonding portion 33a and lock therewith. Thereafter, the assembly is sintered to complete the composite body.

Composite Body in Fig. 10 and Method of Manufacturing the Same

Ceramic body 31 and metal body 32 of the same shapes as those in Fig. 9 are fitted in a recess of matrix body 33. Infiltrator 34 is infiltrated in bonding portion 33a of the matrix body through metal body 32 during or after sintering, thereby completing the composite body.

Example

Composite body samples having the shape shown in Fig. 11 and control composite body samples having the shape shown in Fig. 12 were prepared. Ceramic bodies 41 of the respective samples were obtained by sintering $Si_3N_4$-5wt%$Y_2O_3$-4wt%$A\ell_2O_3$-3wt%$A\ell N$-1.5wt%$TiO_2$ at ambient temperature. SUS 304 stainless steel was used as a metal powder for metal bodies 42. SK-3 carbon tool steel was used for matrix bodies 43. The respective samples had the following dimensions: lengths $\ell 1 = 40$ mm, $\ell 2 = 18$ mm, and $\ell 3 = 30$ mm; and diameters d1 = 10 mm, d2 = 18 mm, d3 = 30 mm, and d4 = 10.5 mm.

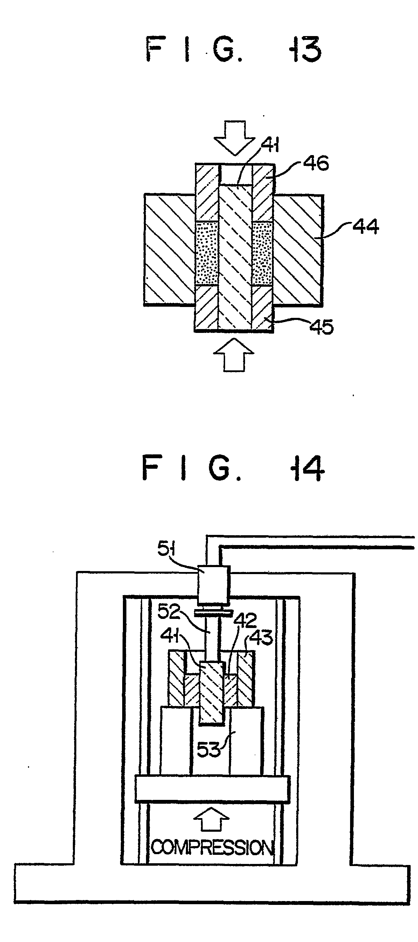

The respective samples were manufactured in the following manner. As shown in Fig.13, ceramic body 41 was placed in die 44. After filling the metal powder on lower punch 45 in a space defined by matrix body 43 and ceramic body 41, pressing was performed by upper punch 46 at a pressure of 6 ton/cm². The assembly was sintered at 1,200°C to obtain metal body 42, which was contracted by 1.1%. After forming a composite body by combining ceramic body 41 and metal body 42, it was pressed into matrix body 43 by a press machine to obtain the sample shown in Figs. 11 and 12. In some samples, a copper mass was placed on sintered metal body 42 and heated to allow infiltration.

Each sample prepared in this manner was mounted on a press testing jig, shown in Fig. 14, and was subjected to a press test by a 10 ton universal testing machine, available from Instron Inc., at a crosshead speed of 0.5 mm/min. The obtained results are shown in Table 1. Note that in Fig. 14 reference numeral 51 denotes a load cell; 52, a press rod; and 53, a support ring.

Table 1
Bonding Strength Test Results

| Treatment | Composite Body | Bonding Strength (kg/mm²) |
|---|---|---|
| No infiltration | Control sample | 7.6 |
| | | 7.1 |
| | | 6.8 |
| | | 6.9 |
| | | 7.0 |
| | | 6.9 |
| | Example sample | 8.3 |
| | | 8.3 |
| | | 8.2 |
| | | 8.1 |
| | | 7.8 |
| | | 7.9 |
| Infiltration | Control sample | 11.3 |
| | | 12.3 |
| | Example sample | 14.8 |
| | | 12.8 |
| | | 12.6 |

\* Bonding strength = (Load)/(contact area between ceramic body and sintered metal body)

It is seen from the above Table that when bonding portions comprising steps were formed, the bonding strength was 7.8 to 8.3 kg/mm². This bonding strength is about 15% higher than Control samples. In the samples of the Example in which copper was infiltrated, the bonding strength was 12.6 to 14.8 kg/mm². This bonding strength is about 65% higher than the samples in which copper was not infiltrated.

**Claims**

1. A composite body combining a ceramic and a metal, comprising:
a bonding portion formed in the outer circumferential surface of a sintered ceramic body having a predetermined shape, and

a sintered metal body obtained from a powder, containing a metal powder as a main component, said metal body being physically bonded with the outer circumferential surface of said ceramic body after fitting with said bonding portion thereof, characterized in that

a matrix body is combined with an outer circumferential surface of said metal body,

the thermal expansion coefficient of said metal body is larger than that of said matrix body and the thermal expansion coefficient of said matrix body is larger than that of said ceramic body.

2. A composite body combining a ceramic and a metal, comprising:

a bonding portion formed in the inner circumferential surface of a sintered ceramic body having a predetermined shape, and

a sintered metal body obtained from a powder, containing a metal powder as a main component, said metal body being physically bonded with the inner circumferential surface of said ceramic body after fitting with said bonding portion thereof,

characterized in that a matrix body is combined with an outer circumferential surface of said ceramic body, a thermal expansion coefficient of said ceramic body is larger than that of said matrix body, and the thermal expansion coefficient of said matrix body is larger than that of said metal body.

3. A composite body according to claim 1, characterized in that said metal body is combined with said ceramic body so as to form a space between said metal body and said bonding portion of said ceramic body and an infiltrator is filled in said space and bonded with said ceramic body.

4. A composite body according to claim 2, characterized in that said metal body is combined with said ceramic body so as to form a space between said metal body and said bonding portion of said ceramic body, and an infiltrator is filled in said space and bonded with said ceramic body.

5. A composite body according to claim 3, characterized in that said matrix body has a bonding portion in a surface thereof which is brought into contact with said metal body.

6. A composite body according to claim 5, characterized in that said bonding portion of said matrix body has a tapered surface.

7. A composite body according to anyone of claims 1 to 4, characterized in that said bonding portion is an annular groove.

8. A composite body according to anyone of claims 1 to 4, characterized in that said bonding portion has a step-like cross-sectional profile.

9. A composite body according to claim 1, characterized in that said matrix body has a bonding portion in an inner circumferential surface thereof which is brought into contact with said metal body.

10. A composite body according to claim 9, characterized in that said bonding portion of said matrix body has a tapered surface.

## Patentansprüche

1. Verbundkörper aus einer Kombination einer Keramik mit einem Metall, umfassend:

einen in der äußeren Umfläche eines gesinterten Keramikkörpers gegebener Form gebildeten verbindenden Abschnitt und einen aus einem Pulver mit einem Metallpulver als Hauptkomponente erhaltenen gesinterten Metallkörper, der mit der äußeren Umfläche des Keramikkörpers nach Anpassung an dessen verbindenden Abschnitt physikalisch verbunden ist, dadurch gekennzeichnet, daß mit einer äußeren Umfläche des Metallkörpers ein Matrixkörper kombiniert ist, wobei der Wärmeausdehnungskoeffizient des Metallkörpers größer ist als derjenige des Matrixkörpers und der Wärmeausdehnungskoeffizient des Matrixkörpers größer ist als derjenige des Keramikkörpers.

2. Verbundkörper aus einer Kombination einer Keramik mit einem Metall, umfassend:

einen in der inneren Umfläche eines gesinterten Keramikkörpers gegebener Form gebildeten verbindenden Abschnitt und einen aus einem Pulver mit einem Metallpulver als Hauptkomponente erhaltenen gesinterten Metallkörper, der mit der inneren Umfläche des Keramikkörpers nach Anpassung an dessen verbindenden Abschnitt physikalisch verbunden ist, dadurch gekennzeichnet, daß mit einer äußeren Umfläche des Keramikkörpers ein Matrixkörper kombiniert ist, wobei der Wärmeausdehnungskoeffizient des Keramikkörpers größer ist als derjenige des Matrixkörpers und der Wärmeausdehnungskoeffizient des Matrixkörpers größer ist als derjenige des Metallkörpers.

3. Verbundkörper nach Anspruch 1, dadurch gekennzeichnet, daß der Metallkörper derart mit dem Keramikkörper kombiniert ist, daß zwischen Metallkörper und dem verbindenden Abschnitt des Keramikkörpers ein Spalt entsteht, und daß ein Füllmaterial in den Spalt gefüllt und mit dem Keramikkörper verbunden ist.

4. Verbundkörper nach Anspruch 2, dadurch gekennzeichnet, daß der Metallkörper derart mit dem Keramikkörper kombiniert ist, daß zwischen Metallkörper und dem verbindenden Abschnitt des Keramikkörpers ein Spalt entsteht und daß ein Füllmaterial in den Spalt gefüllt und mit dem Keramikkörper verbunden ist.

5. Verbundkörper nach Anspruch 3, dadurch gekennzeichnet, daß der Matrixkörper in einer seiner Oberflächen einen verbindenden Abschnitt aufweist, der mit dem Metallkörper in Berührung gebracht ist.

6. Verbundkörper nach Anspruch 5, dadurch gekennzeichnet, daß der verbindende Abschnitt des Matrixkörpers eine abgeschrägte Fläche aufweist.

7. Verbundkörper nach einem der Ansprüche 1 bis 4, dadurch gekennzeichnet, daß der verbindende Abschnitt aus einer ringförmigen Ausnehmung besteht.

8. Verbundkörper nach einem der Ansprüche 1 bis 4, dadurch gekennzeichnet, daß der verbindende Abschnitt ein stufenartiges Querschnittsprofil aufweist.

9. Verbundkörper nach Anspruch 1, dadurch gekennzeichnet, daß der Matrixkörper in einer seiner inneren Umflächen einen verbindenden Abschnitt aufweist, der mit dem Metallkörper in Berührung gebracht ist.

10. Verbundkörper nach Anspruch 9, dadurch gekennzeichnet, daß der verbindende Abschnitt des Matrixkörpers eine abgeschrägte Fläche aufweist.

**Revendications**

1. Un corps composite combinant une céramique et un métal, comprenant:
une portion de liaison formée sur la surface circonférentielle extérieure d'un corps céramique fritté ayant une forme prédéterminée, et
un corps métallique fritté obtenu à partir d'une poudre, contenant une poudre métallique comme composant principal, ledit corps métallique étant lié physiquement à la surface circonférentielle extérieure dudit corps céramique après assemblage avec ladite portion de liaison, caractérisé en ce que
un corps de matrice est combiné avec la surface circonférentielle extérieure dudit corps métallique, le coefficient de dilatation thermique dudit corps métallique étant supérieur à celui dudit corps de matrice, et le coefficient de dilatation thermique dudit corps de matrice étant supérieur à celui dudit corps céramique.

2. Un corps composite combinant une céramique et un métal, comprenant:
une portion de liaison formée sur la surface circonférentielle interne d'un corps céramique fritté ayant une forme prédéterminée, et
un corps métallique fritté obtenu à partir d'une poudre, contenant une poudre métallique comme composant principal, ledit corps métallique étant lié physiquement à la surface circonférentielle interne dudit corps céramique après assemblage avec ladite portion de liaison, caractérisé en ce que
un corps de matrice est combiné à la surface circonférentielle extérieure dudit corps de céramique, le coefficient de dilatation thermique dudit corps céramique étant supérieur à celui dudit corps de matrice, et le coefficient de dilatation thermique dudit corps de matrice étant supérieur à celui dudit corps métallique.

3. Un corps composite selon la revendication 1, caractérisé en ce que ledit corps métallique est combiné audit corps céramique pour former un espace entre ledit corps métallique et ladite portion de liaison dudit corps céramique et un élément d'infiltration est introduit dans ledit espace et lié audit corps céramique.

4. Un corps composite selon la revendication 2, caractérisé en ce que ledit corps métallique est combiné audit corps céramique afin de former un espace entre ledit corps métallique et ladite portion de liaison dudit corps céramique, et un élément d'infiltration est introduit dans ledit espace et lié avec ledit corps céramique.

5. Un corps composite selon la revendication 3, caractérisé en ce que ledit corps de matrice a une portion de liaison dans sa surface qui est amenée au contact dudit corps métallique.

6. Un corps composite selon la revendication 5, caractérisé en ce que ladite portion de liaison dudit corps de matrice a une surface conique.

7. Un corps composite selon l'une quelconque des revendications 1 à 4, caractérisé en ce que ladite portion de liaison est une gorge annulaire.

8. Un corps composite selon l'une quelconque des revendications 1 à 4, caractérisé en ce que ladite portion de liaison a un profil à section transversale à gradins.

9. Un corps composite selon la revendication 1, caractérisé en ce que ledit corps de matrice a une portion de liaison dans sa surface circonférentielle interne qui est amenée au contact dudit corps métallique.

10. Un corps composite selon la revendication 9, caractérisé en ce que ladite portion de liaison dudit corps de matrice a une surface conique.

FIG. 1

FIG. 2

FIG. 3

FIG. 4

F I G. 5

F I G. 6

F I G. 7

F I G. 8

FIG. 9

FIG. 10

FIG. 11

FIG. 12

# F I G. 13

# F I G. 14

COMPRESSION